# EUROPÄISCHE PATENTSCHRIFT

(11) **EP 3 449 212 B1**
(45) Veröffentlichungstag und Bekanntmachung des Hinweises auf die Patenterteilung: **18.12.2019**
(21) Anmeldenummer: 17711630.8
(22) Anmeldetag: 16.03.2017
(51) Int. Cl.: G01B 21/30, G01B 5/00

(54) **VERFAHREN ZUR ERMITTLUNG VON GESTALTABWEICHUNGEN EINER OBERFLÄCHE, OBERFLÄCHENBEWERTUNGS-SYSTEM UND COMPUTERPROGRAMMPRODUKT**
METHOD FOR DETERMINING SHAPE DEVIATIONS OF A SURFACE, SURFACE EVALUATION SYSTEM, AND COMPUTER PROGRAM PRODUCT
PROCÉDÉ DE DÉTERMINATION DE TOLÉRANCES SUR LA FORME D'UNE SURFACE, SYSTÈME D'ÉVALUATION DE SURFACE ET PRODUIT-PROGRAMME INFORMATIQUE

(30) Priorität: 29.04.2016 DE 102016207342
(43) Veröffentlichungstag der Anmeldung: 06.03.2019
(73) Patentinhaber: Bayerische Motoren Werke Aktiengesellschaft, 80809 München (DE)
(72) Erfinder: GOSS, Andreas, 81667 München (DE)
(86) Internationale Anmeldenummer: PCT/EP2017/056191
(87) Internationale Veröffentlichungsnummer: WO 2017/186403

(56) Entgegenhaltungen:
- DE-A1- 10 258 493
- DE-A1-102006 015 627
- DE-A1-102015 210 619
- DE-B3-102011 051 800
- US-A1- 2005 049 823

## Beschreibung

Die Erfindung betrifft ein Verfahren zur Ermittlung von Gestaltabweichungen einer Oberfläche, ein Oberflächenbewertungs-System sowie ein Computerprogramm-Produkt.

Die Erfindung ist insbesondere anwendbar zur Ermittlung von Gestaltabweichungen insbesondere der ersten bis vierten Ordnung gemäß DIN 4760. Vorzugsweise ist die Erfindung für die Ermittlung von Welligkeiten vorgesehen.

In der US 2005/0049823 A1 ist ein Verfahren zur Analyse der Welligkeit einer Oberfläche beschrieben. Dabei ist beispielartig die Untersuchung und Bewertung der Welligkeit eines Zylinderkopfs längs einer Messstrecke in überlappenden Messfenstern als Bewertungs-Abschnitten dargestellt.

Aus der DE102006015627A1 ist ein Verfahren zur Bestimmung von Welligkeiten mittels einer Fourieranalyse bekannt.

Aufgabe der vorliegenden Erfindung ist, ein Verfahren zur Ermittlung der Welligkeit einer Oberfläche Oberflächenbewertungs-System sowie ein Computerprogramm-Produkt bereitzustellen, das einfach ausführbar ist und zu zuverlässigen Ergebnissen führt.

Weiterhin ist Aufgabe der vorliegenden Erfindung, ein Oberflächenbewertungs-System sowie ein Computerprogramm-Produkt bereitzustellen, das zur Durchführung des erfindungsgemäßen Verfahrens einfach ausgeführt ist und zuverlässige Ergebnisse zur Ermittlung der Welligkeit einer Oberfläche liefert.

Diese Aufgabe wird mit den Merkmalen der unabhängigen Ansprüche gelöst. Weitere Ausführungsformen sind in den auf diese jeweils rückbezogenen Unteransprüchen angegeben.

Das erfindungsgemäße Verfahren ist zur Bewertung der Welligkeit eines Ist-Oberflächenabschnitts einer realen Ist-Oberfläche auf der Basis von gemessenen Vertikal-Informationen jeweils von Messpunkten einer Gruppe von auf der Ist-Oberfläche gelegenen Messpunkten vorgesehen, wobei die Gruppe von Messpunkten in einem die Positionen der Messpunkte definierenden Messpunkte-Erstreckungsabschnitt des Ist-Oberflächenabschnitts gelegen sind. Das Verfahren verwendet zumindest eine Iteration jeweils mit einer Anordnung von Bewertungs-Abschnitten, die in dem Ist-Oberflächenabschnitt zumindest abschnittsweise über die Gruppe der Messpunkte verteilt oder einen die Positionen der Messpunkte definierenden Messpunkte-Erstreckungsabschnitt verteilt und versetzt zueinander angeordnet sind und sich insgesamt über zumindest einen Teil der Gruppe der Messpunkte oder des Messpunkte-Erstreckungsabschnitts erstrecken, wobei eine Iteration jeweils die folgenden Schritte aufweist:
(a) für jeden Messpunkt einer Anzahl von Messpunkten jedes Bewertungs-Abschnitts Ermittlung eines maximalen Vertikalabstands, der sich als größter Abstand in einer vorgegebenen Vertikalrichtung zwischen jeweils zwei Messpunkten ergibt, wobei die Vertikalrichtung quer zu dem Messpunkte-Erstreckungsabschnitt verläuft und der maximale Vertikalabstand jeweils zwischen einem Bewertungsabschnitt-Tiefstpunkt und einem Bewertungsabschnitt-Höchstpunkt auftritt,
(b) Ermittlung einer Bewertungsabschnitt-Steigung, die eine Verbindungsgerade zwischen dem Bewertungsabschnitt-Tiefstpunkt und dem Bewertungsabschnitt-Höchstpunkt aufgrund des maximalen Vertikal-Abstands bezogen auf einen Abstand zwischen dem Bewertungsabschnitt-Tiefstpunkt und dem Bewertungsabschnitt-Höchstpunkt in der Projektion derselben auf einen Soll-Oberflächenabschnitt hat, der ein ideales Modell des Ist-Oberflächenabschnitts darstellt,
wobei in einem weiteren Verfahrensschritt die in der zumindest einen Iteration für die jeweiligen Bewertungs-Abschnitte derselben jeweils ermittelten Wertepaare jeweils eines maximalen Vertikalabstands und einer Bewertungsabschnitt-Steigung einem Grenz-Kriterium zugeordnet wird.

Nach einer erfindungsgemäßen Lösung sind die Messpunkte der Gruppe von Messpunkten auf einer Reihe gelegen, die eine Messpunkte-Linie oder Mess-Spur bilden, so dass der Messpunkte-Erstreckungsabschnitt eine Mess-Spur oder eine Messpunkte-Linie ist. Demnach kann das erfindungsgemäße Verfahren zur Bewertung der Welligkeit eines Ist-Oberflächenabschnitts einer realen Ist-Oberfläche auf der Basis von gemessenen Vertikal-Informationen jeweils von auf einer Mess-Spur gelegenen Messpunkten des Ist-Oberflächenabschnitts vorgesehen sein. Demnach verwendet eine Ausführungsform des erfindungsgemäßen Verfahrens zumindest eine Iteration jeweils mit einer Anordnung von Bewertungs-Abschnitten auf der Mess-Spur oder der Messpunkte-Linie, die entlang der Messpunkte-Linie versetzt zueinander angeordnet sind und sich insgesamt über zumindest über einen Teil der Länge der Mess-Spur erstrecken. Dabei weist das Verfahren zumindest eine Iteration jeweils mit den folgenden Schritten auf:
(a) für jeden Messpunkt einer Anzahl von Messpunkten jedes Bewertungs-Abschnitts Ermittlung eines maximalen Vertikalabstands, der sich als größter Abstand in einer vorgegebenen Vertikalrichtung zwischen jeweils zwei Messpunkten ergibt, wobei die Vertikalrichtung quer zu der Messpunkte-Linie verläuft und der maximale Vertikalabstand jeweils zwischen einem Bewertungsabschnitt-Tiefstpunkt und einem Bewertungsabschnitt-Höchstpunkt auftritt,
(b) Ermittlung einer Bewertungsabschnitt-Steigung, die eine Verbindungsgerade zwischen dem Bewertungsabschnitt-Tiefstpunkt und dem Bewertungsabschnitt-Höchstpunkt aufgrund des maximalen Vertikal-Abstands bezogen auf einen Abstand zwischen dem Bewertungsabschnitt-Tiefstpunkt und dem Bewertungsabschnitt-Höchstpunkt in der Projektion derselben auf einen Soll-Oberflächenabschnitt hat, der ein ideales Modell des Ist-Oberflächenabschnitts darstellt,
wobei in einem weiteren Verfahrensschritt die in der zumindest einen Iteration für die jeweiligen Bewertungs-Abschnitte derselben jeweils ermittelten Wertepaare jeweils eines maximalen Vertikalabstands und einer Bewertungsabschnitt-Steigung einem Grenz-Kriterium zugeordnet wird.

Der für einen jeweiligen Bewertungs-Abschnitt ermittelte Bewertungsabschnitt-Tiefstpunkt und der Bewertungsabschnitt-Höchstpunkt sind zwei Messpunkte der in dem jeweiligen Bewertungs-Abschnitt existierenden Messpunkte.

Nach einer Ausführungsform des erfindungsgemäßen Verfahrens ist vorgesehen, dass die Gruppe von auf der Ist-Oberfläche gelegenen Messpunkten eine Reihe von Messpunkten ist und dass der Messpunkte-Erstreckungsabschnitt eine Messpunkte-Linie, auf der die Messpunkte der Gruppe von Messpunkten gelegen sind, ist.

Nach einer Ausführungsform des erfindungsgemäßen Verfahrens ist alternativ oder zusätzlich vorgesehen, dass sich die Gruppe von auf der Ist-Oberfläche gelegenen Messpunkten flächig über die Ist-Oberfläche erstreckt und dass der Messpunkte-Erstreckungsabschnitt ein Flächenabschnitt ist, der die Gruppe von Messpunkten umgrenzt.

Nach einer Ausführungsform des erfindungsgemäßen Verfahrens ist vorgesehen, dass das Verfahren zumindest zwei Iterationen aufweist und die Anordnungen in unterschiedlichen Iterationen sich in zumindest einem der beiden folgenden Eigenschaften unterscheiden:
(i) die Größen der Bewertungs-Abschnitte verschiedener Anordnungen von Bewertungs-Abschnitten auf dem Messpunkte-Erstreckungsabschnitt sind zumindest teilweise unterschiedlich,
(ii) die Positionen der Bewertungs-Abschnitte verschiedener Anordnungen von Bewertungs-Abschnitten auf dem Messpunkte-Erstreckungsabschnitt sind zumindest teilweise unterschiedlich.

Dabei kann insbesondere vorgesehen sein, dass sich zumindest in zwei Iterationen die Bewertungs-Abschnitte der jeweiligen Anordnungen von Bewertungs-Abschnitten überlappen und sich die Anordnungen der Bewertungs-Abschnitte durch ein unterschiedliches Maß der Überlappung der Bewertungs-Abschnitte unterscheiden.

Nach einer Ausführungsform des erfindungsgemäßen Verfahrens ist vorgesehen, dass in zumindest einer Iteration die Anordnung der Bewertungs-Abschnitte den Messpunkte-Erstreckungsabschnitt vollständig abdeckt.

Nach einer Ausführungsform des erfindungsgemäßen Verfahrens ist vorgesehen, dass die Bewertungs-Abschnitte einer Anordnung von Bewertungs-Abschnitten einer jeweiligen Iteration dieselben Abschnittslängen haben.

Nach einer Ausführungsform des erfindungsgemäßen Verfahrens ist vorgesehen, dass die Bewertungs-Abschnitte einer Anordnung von Bewertungs-Abschnitten der verschiedenen Iterationen unterschiedliche Größen haben.

Nach einer Ausführungsform des erfindungsgemäßen Verfahrens ist vorgesehen, dass sich die sich zumindest teilweise über jeweils einen Messpunkte-Erstreckungsabschnitt erstreckenden Bewertungs-Abschnitte einer Anordnung von Bewertungs-Abschnitten zumindest teilweise einander überlappen.

Nach einer Ausführungsform des erfindungsgemäßen Verfahrens ist vorgesehen, dass der Soll-Oberflächenabschnitt ein zylindrisch umlaufender Oberflächenabschnitt ist und sich der Messpunkte-Erstreckungsabschnitt über den Umfang des zylindrisch umlaufenden Oberflächenabschnitts erstreckt. Dabei kann insbesondere vorgesehen sein, dass die Anordnung von Bewertungs-Abschnitten zumindest einer Iteration sich über eine Umfangslänge hinaus erstreckt und in dem jeweiligen Abschnitt eines Bewertungs-Abschnitts, der sich über eine Umfangslänge hinaus erstreckt die Mess-Spur einer anschließenden weiteren Umfangslänge verwendet wird.

Nach einer Ausführungsform des erfindungsgemäßen Verfahrens ist vorgesehen,
- dass die Zuordnung der Wertepaare jeweils eines maximalen Vertikalabstands und einer Bewertungsabschnitt-Steigung einem Grenz-Kriterium grafisch durch Eintrag der Wertepaare in einem Wertefeld erfolgt, das durch eine Koordinatenachse für Bewertungsabschnitt-Steigungen und eine Koordinatenachse für maximale Vertikalabstände aufgespannt ist, und
- dass das Grenz-Kriterium eine in dem Wertefeld verlaufende Grenzkurve ist, die das Wertefeld in eine Seite mit zulässigen und eine Seite mit nicht zulässigen Abweichungen von der Soll-Oberfläche teilt.

Nach einer Ausführungsform des erfindungsgemäßen Verfahrens ist vorgesehen,
- dass das Grenz-Kriterium ein Kriterium-Wert und insbesondere ein numerisches Kriterium ist,
- dass für jeweils ein Wertepaar eines Bewertungs-Abschnitts eine Wertepaar-Wertangabe und insbesondere ein numerischer Wert ermittelt wird,
- dass die Zuordnung von Grenz-Kriterium und Wertepaaren durch einen Vergleich des Kriterium-Werts mit der Wertepaar-Wertangabe realisiert ist.

Nach einem weiteren Aspekt der Erfindung ist ein Computerprogrammprodukt vorgesehen, das zur Durchführung einer Ausführungsform des erfindungsgemäßen Verfahrens ausgeführt ist.

Nach einem weiteren Aspekt der Erfindung ist ein Oberflächenbewertungs-System zur Bewertung einer Abweichung eines Ist-Oberflächenabschnitts einer realen Ist-Oberfläche von einem Soll-Oberflächenabschnitt vorgesehen, das Oberflächenbewertungs-System aufweisend ein Sensor-System zur Ermittlung von Vertikal-Informationen eines Ist-Oberflächenabschnitts, eine Auswertungsvorrichtung mit einer Auswertungsfunktion, die eine Schnittstelle zu dem Sensor-System aufweist,
wobei die Auswertungsfunktion zumindest eine Iteration jeweils mit einer Anordnung von Bewertungs-Abschnitten ausführt, die in dem Ist-Oberflächenabschnitt zumindest abschnittsweise über den Messpunkte-Erstreckungsabschnitt verteilt und versetzt zueinander angeordnet sind, wobei die Auswertungsfunktion eine Verarbeitungsfunkton aufweist, die folgende Schritte ausführt:
(a) für jeden Messpunkt einer Anzahl von Messpunkten jedes Bewertungs-Abschnitts Ermittlung eines maximalen Vertikalabstands, der sich als größter Abstand in einer vorgegebenen Vertikalrichtung zwischen jeweils zwei Messpunkten ergibt, wobei die Vertikalrichtung quer zu dem Messpunkte-Erstreckungsabschnitt verläuft und der maximale Vertikalabstand jeweils zwischen einem Bewertungsabschnitt-Tiefstpunkt und einem Bewertungsabschnitt-Höchstpunkt auftritt,
(b) Ermittlung einer Bewertungsabschnitt-Steigung, die eine Verbindungsgerade zwischen dem Bewertungsabschnitt-Tiefstpunkt und dem Bewertungsabschnitt-Höchstpunkt aufgrund des maximalen Vertikal-Abstands bezogen auf einen Abstand zwischen dem Bewertungsabschnitt-Tiefstpunkt und dem Bewertungsabschnitt-Höchstpunkt in der Projektion derselben auf einen Soll-Oberflächenabschnitt hat, der ein ideales Modell des Ist-Oberflächenabschnitts darstellt,
wobei in einem weiteren Verfahrensschritt die in der zumindest einen Iteration für die jeweiligen Bewertungs-Abschnitte derselben jeweils ermittelten Wertepaare jeweils eines maximalen Vertikalabstands und einer Bewertungsabschnitt-Steigung einem Grenz-Kriterium zugeordnet wird.

Nach einer Ausführungsform des erfindungsgemäßen Oberflächenbewertungs-Systems ist vorgesehen, dass die Verarbeitungsfunktion zur Ausführung einer Ausführungsform des erfindungsgemäßen Verfahrens realisiert ist.

Der Ausdruck "entlang" kann hierin im Zusammenhang mit den hierin genannten Richtungsangaben, die den Verlauf einer Konturlinie oder einer Oberfläche oder eines Oberflächen-Abschnitts betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und vorzugsweise von maximal 30 Grad von einer Bezugsrichtung oder Bezugsachse abweicht, auf die bzw. der die jeweilige Richtungsangabe bezogen ist.

Der Ausdruck "quer" kann hierin im Zusammenhang mit den hierin genannten Richtungsangaben, die den Verlauf einer Konturlinie oder einer Oberfläche oder eines Oberflächen-Abschnitts betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von minimal 45 Grad und vorzugsweise von minimal 60 Grad von einer Bezugsrichtung oder Bezugsachse abweicht, auf die bzw. der die jeweilige Richtungsangabe bezogen ist.

Der Ausdruck "generell" bedeutet insbesondere, dass das betreffende Merkmal nicht nur an der Ausführungsform, für die in diesem Zusammenhang der Ausdruck generell mit Bezug auf das jeweilige Merkmale verwendet worden ist, sondern auch an jeder anderen der hiermit beschriebenen Ausführungsformen vorhanden sein kann.

Im Folgenden werden Ausführungsformen der Erfindung an Hand der beiliegenden Figuren beschrieben, die zeigen:
- Figur 1 ein Diagramm für die Darstellung von Messwerten für Vertikalinformationen für eine an einem Ist-Oberflächenabschnitt erzeugten Mess-Spur, wobei der Ist-Oberflächenabschnitt beispielartig eine Zapfenfläche einer Kurbelwelle ist,
- Figur 2 eine schematische Darstellung eines Ist-Oberflächenabschnitts, in den beispielartig ein Messpunkte-Erstreckungsabschnitt in Form einer Mess-Spur sowie Bewertungs-Abschnitte zur Anwendung des erfindungsgemäßen Verfahrens eingetragen sind, wobei nur zur besseren Erkennbarkeit die Bewertungs-Abschnitte quer zur Mess-Spur versetzt angeordnet sind, während diese gemäß des erfindungsgemäßen Verfahrens auf der Mess-Spur liegen,
- Figur 3 eine schematische Darstellung eines Ist-Oberflächenabschnitts, in den beispielartig ein Messpunkte-Erstreckungsabschnitt in Form eines Flächenabschnitts sowie Bewertungs-Abschnitte zur Anwendung des erfindungsgemäßen Verfahrens eingetragen sind,
- Figur 4 ein Diagramm gemäß Figur 1, in den beispielartig ein Bewertungsabschnitt-Tiefstpunkt und ein Bewertungsabschnitt-Höchstpunkt für einen Bewertungs-Abschnitt sowie eine Verbindungsgerade zwischen diesen zur Ermittlung einer Bewertungsabschnitt-Steigung eingetragen sind,
- Figur 5 ein Diagramm, in dem eine Zuordnung des maximalen Vertikalabstands und der Bewertungsabschnitt-Steigung einem Grenz-Kriterium dargestellt ist.

Nach dem erfindungsgemäßen Verfahren erfolgt zunächst die Messung von Vertikal-Informationen und insbesondere von Höhen-Koordinaten von Punkten eines Ist-Oberflächenabschnitts S1 entlang einer Mess-Spur M1, die entlang der Längsrichtung L1 des Ist-Oberflächenabschnitts S1 entsteht. Vertikal-Informationen weist Werte von Punkten in Bezug auf eine vorgegebene Vertikalrichtung auf, die quer zu der Mess-Spur verläuft. Die Vertikal-Informationen können auch Positionsangaben über die Position eines jeweiligen Punkts auf der Mess-Spur aufweisen.

Die Vertikal-Informationen können Höhenwerte auf der Basis eines Koordinatensystems mit einer Vertikal-Koordinate sein, die in der Vertikal-Richtung quer zum Messpunkte-Erstreckungsabschnitt oder einer lokalen Orientierung derselben an der Stelle des jeweiligen Messpunktes. Dabei kann der Messpunkte-Erstreckungsabschnitt auch als Abwicklung auf einer Referenzebene betrachtet werden, so dass die Vertikalrichtung quer und insbesondere senkrecht zur flächigen Erstreckung der Referenzebene verläuft.

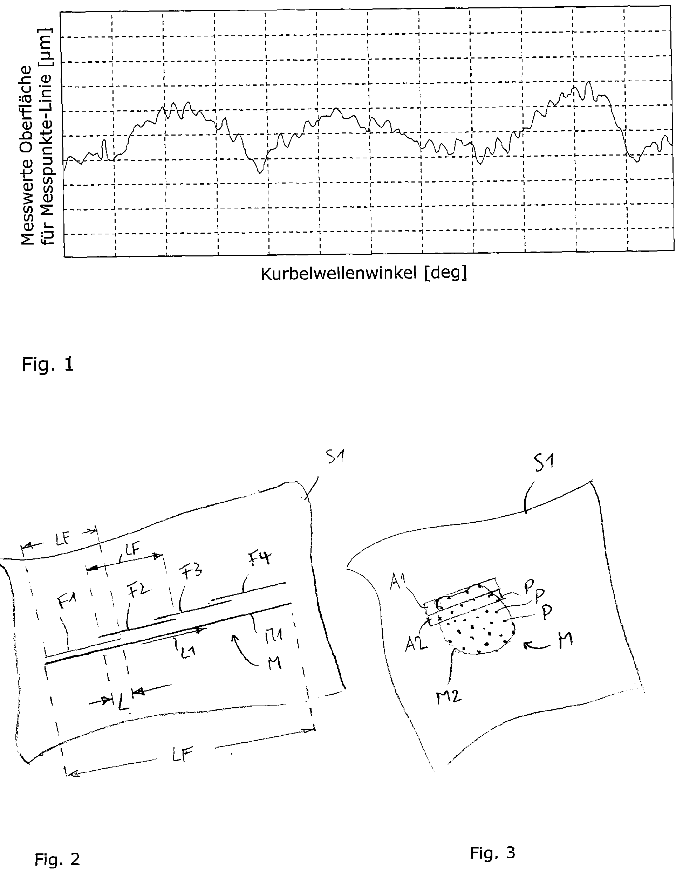

Die Figur 1 zeigt Messwerte oder Vertikal-Informationen von Messpunkten entlang der Messpunkte-Linie oder Mess-Spur M1, die in der Figur 2 dargestellt ist. Die Vertikalrichtung ist vorzugsweise für einen jeweiligen Anwendungsfall des erfindungsgemäßen Verfahrens in geeigneter Weise vorgegeben. Im gegebenen Fall verläuft die Vertikalrichtung senkrecht zur Oberfläche S1. Das Messwerte-Diagramm der Figur 1 ist definiert durch den Kurbelwellenwinkel als Angabe für die Position des jeweiligen Messpunktes auf der Oberfläche S1. Die Messwerte auf der Messpunkte-Linie sind auf der Ordinatenachse eingetragen, so dass sich der gezeichnete Kurvenverlauf für die Oberfläche auf der Messpunkte-Linie ergibt.

Der Ist-Oberflächenabschnitt S1, für den die Anwendung des erfindungsgemäßen Verfahrens vorgesehen ist, kann insbesondere ein Oberflächenabschnitt einer Funktionsfläche oder Steuerfläche sein. Der Oberflächenabschnitt kann Teil der Funktionsfläche sind oder diese vollständig umfassen. Die Funktionsfläche kann zu einer Maschinenkomponente gehören. Beispielsweise ist der Oberflächenabschnitt oder die Funktionsfläche eine Steuerfläche eines ersten Maschinenbauteils, mit der diese auf ein zweites Maschinenbauteil wirkt, um dieses zu betätigen. Beispielsweise ist die Funktionsfläche eine Zapfenfläche einer Kurbelwelle, auf die ein Pleuel wirkt.

Die Funktionsfläche und somit der Ist-Oberflächenabschnitt S1 kann in der Längsrichtung L1 gesehen unterschiedlich geformt sein. Insbesondere kann der Ist-Oberflächenabschnitt S1 eben, also planar, oder gekrümmt geformt sein.

Bei einer speziellen Ausführungsform der Erfindung ist der Ist-Oberflächenabschnitt S1 eine umlaufende Oberfläche und insbesondre zylindrische Mantelfläche, wobei die Mess-Spur in radialer Richtung verläuft. Ein Beispiel dafür ist die Zapfenfläche einer Kurbelwelle.

Für die jeweils betroffene Funktionsfläche besteht, insbesondere zur Sicherstellung der Funktion der Funktionsfläche, die Anforderung einer nur maximal zulässigen Welligkeit. Diese kann mit Hilfe des erfindungsgemäßen Verfahrens überprüft werden, um die Funktionstauglichkeit solcher Maschinenkomponenten zu bewerten.

Die Messpunkte einer Gruppe von Messpunkten sind auf der Ist-Oberfläche angeordnet und erstrecken sich über einen Messpunkte-Erstreckungsabschnitt M, der die Positionen der Messpunkte der Gruppe der Messpunkte auf der Ist-Oberfläche eingrenzt oder definiert.

Nach einer Ausführungsform des Verfahrens sind die Messpunkte der Gruppe von Messpunkten auf einer Reihe gelegen, die eine Mess-Spur bilden, so dass der Messpunkte-Erstreckungsabschnitt die Mess-Spur oder eine Messpunkte-Linie ist. Eine solche Messpunkte-Linie kann geradlinig oder gekrümmt verlaufen. Umgekehrt kann auch eine Messlinie vorliegen, aus der auf diese liegende diskrete Messpunkte zur Bildung der Gruppe von Messpunkten abgeleitet werden können. Dies kann z.B. nach einem Zufallsverfahren, nach Vorgabe eines Abstands zwischen jeweils zwei Messpunkten, optional zusammen mit einer Vorgabe einer Maximalzahl von Messpunkten, erfolgen. Dabei sind die Bewertungs-Abschnitte einer Anordnung von Bewertungs-Abschnitten entlang der Längsrichtung L1 hintereinander angeordnet.

In diesem Fall sind die Bewertungs-Abschnitte vorzugsweise als Linien-Abschnitte ausgeführt.

Die Gruppe von Messpunkten kann auch flächig über die Ist-Oberfläche verteilt gelegen sein. Hinsichtlich des Messpunkte-Erstreckungsabschnitts M kann eine kontinuierliche Umgrenzungslinie definiert werden, die in Bezug auf die flächige Erstreckung die jeweils äußersten Punkte begrenzt und somit die Gruppe der flächig verteilten Messpunkte umgrenzt. Für den Messpunkte-Erstreckungsabschnitt M kann hinsichtlich der Anordnung der Bewertungs-Abschnitte eine vorgegebene Erstreckungsrichtung definiert sein.

In diesem Fall sind die Bewertungs-Abschnitte vorzugsweise als Flächen-Abschnitte ausgeführt.

Insbesondere in diesem Zusammenhang bedeutet der Ausdruck "verteilt" auch, dass zwischen den Bewertungs-Abschnitten Lücken bestehen oder dass diese einander überlappend angeordnet sind oder dass diese den jeweiligen Messpunkte-Erstreckungsabschnitt M vollständig oder teilweise abdecken, dass die Bewertungs-Abschnitte also den jeweiligen Messpunkte-Erstreckungsabschnitt nicht vollständig abdecken müssen, jedoch diesen vollständig abdecken können.

Die Messung eines Konturverlaufs des Ist-Oberflächenabschnitts S1 und somit die Ermittlung von Vertikal-Informationen erfolgt mittels eines Messkopfs oder Messgebers eines Sensor-Systems. Der Messkopf bzw. das Sensor-System wird dabei entlang eines Soll-Messwegs bewegt, für dessen Punkte als Vertikal-Informationen insbesondere relative oder absolute Höheninformationen gemessen werden. Diese Punkte sind auf einer Mess-Spur gelegene Messpunkte des Ist-Oberflächenabschnitts.

Das Sensor-System kann insbesondere ein Abstandsmess-System sein, das einen Messkopf zur Erfassung eines Abstands von diesem zu einem jeweiligen Punkt der zu erfassenden Funktionsfläche aufweist. Dieser Abstand an einem jeweiligen Punkt der Messpunkte-Linie oder Mess-Spur M1 ist eine Vertikal-Information. Diese kann beispielweise auf ein Koordinatensystem bezogen und auf diese Weise für den jeweiligen Anwendungsfall transformiert werden.

Aus diesem Abstand kann für jeden Punkt auf der Messpunkte-Linie oder Mess-Spur M1 eine Vertikal-Information ermittelt werden. Bei der Messung des Konturverlaufs wird dieser Messkopf entlang eines Soll-Messwegs vorzugsweise in einem vorbestimmten Abstand über den Ist-Oberflächenabschnitt S1 gefahren, so dass aus dem Abstand des Messkopfs oder Messgebers zu der Oberfläche bei vorgegebenem Stellweg des Sensors ermittelt wird.

Für das erfindungsgemäße Verfahren werden einer Messpunkte-Linie oder Mess-Spur M1 eine Anordnung aus einer Mehrzahl von Bewertungs-Abschnitten zugeordnet. Dabei wird zumindest eine Iteration jeweils mit einer Anordnung von Bewertungs-Abschnitten auf der Mess-Spur verwendet, die entlang der Mess-Spur versetzt zueinander angeordnet sind und sich insgesamt über zumindest über einen Teil der Länge der Mess-Spur erstrecken. Die Bewertungs-Abschnitte einer Anordnung von Bewertungs-Abschnitten können sich vollständig über eine jeweilige Mess-Spur erstrecken, so dass diese abgedeckt ist. Dagegen kann auch vorgesehen sein, dass sich die Bewertungs-Abschnitte einer Anordnung von Bewertungs-Abschnitten nicht vollständig über eine jeweilige Mess-Spur erstrecken, so dass diese nicht vollständig abgedeckt ist.

In der Figur 2 ist beispielartig eine Anordnung von Bewertungs-Abschnitten F1, F2, F3, F4 an einem Erstreckungsabschnitt M in Form einer Messpunkte-Linie oder Mess-Spur M1, die sich in einer Längsrichtung L1 erstreckt, dargestellt. Bei dieser Ausführungsform der Anordnung von Bewertungs-Abschnitten F1, F2, F3, F4 haben die Bewertungs-Abschnitte F1, F2, F3, F4 dieselbe Länge LF. Zudem überlappen sich die Bewertungs-Abschnitte F1, F2, F3, F4 mit einer Überlappungslänge L, die ein Überlappungsmaß darstellt. Diese kann als Bruchteil der Länge LF dargestellt werden.

Nach dem erfindungsgemäßen Verfahren weist eine Iteration jeweils die folgenden Schritte auf:
(a) für jeden Messpunkt einer Anzahl von Messpunkten jedes Bewertungs-Abschnitts Ermittlung eines maximalen Vertikalabstands, der sich als größter Abstand in einer vorgegebenen Vertikalrichtung Y zwischen jeweils zwei Messpunkten ergibt, wobei die Vertikalrichtung Y quer zu der Messpunkte-Linie oder Mess-Spur M1 verläuft und der maximale Vertikalabstand jeweils zwischen einem Bewertungsabschnitt-Tiefstpunkt P1 und einem Bewertungsabschnitt-Höchstpunkt P2 auftritt,
(b) Ermittlung einer Bewertungsabschnitt-Steigung, die eine Verbindungsgerade zwischen dem Bewertungsabschnitt-Tiefstpunkt P1 und dem Bewertungsabschnitt-Höchstpunkt P2 aufgrund des maximalen Vertikal-Abstands ΔY bezogen auf einen Abstand ΔX zwischen dem Bewertungsabschnitt-Tiefstpunkt P1 und dem Bewertungsabschnitt-Höchstpunkt P2 in der Projektion derselben auf einen Soll-Oberflächenabschnitt hat, der ein ideales Modell des Ist-Oberflächenabschnitts S1 darstellt.

Das Verfahren verwendet in zumindest einer Iteration jeweils mit einer Anordnung von Bewertungs-Abschnitten an der Messpunkte-Linie M1. Generell werden dabei vorzugsweise in einer Iteration Bewertungs-Abschnitte vorgesehen, die nach Länge und Anzahl den Ist-Oberflächenabschnitt S1 abdecken. Davon unabhängig werden generell vorzugsweise in den Iterationen eine oder mehrere der folgenden Bestimmungsgrößen der Bewertungs-Abschnitte verändert:
(1) Abstand oder Überlappungsbetrag zwischen jeweils zwei benachbarten Bewertungs-Abschnitten,
(2) Größe, also Länge der Bewertungs-Abschnitte, z.B. der Bewertungs-Abschnitte F1, F2, F3, F4.

Die Ermittlung des Bewertungsabschnitt-Tiefstpunkt P1 und dem Bewertungsabschnitt-Höchstpunkt P2 und der Bewertungsabschnitt-Steigung ist beispielartig für einen Bewertungs-Abschnitt F1 in der Figur 3 dargestellt: Innerhalb des Bewertungs-Abschnitts F1 gibt es keine zwei Punkte, die in der Y-Richtung einen größeren Abstand voneinander aufweisen als der Bewertungsabschnitt-Tiefstpunkt P1 und der Bewertungsabschnitt-Höchstpunkt P2.

Die Figur 3 zeigt einen Ist-Oberflächenabschnitt S1 mit einem Messpunkte-Erstreckungsabschnitt M in Form eines Flächenabschnitts M2 sowie mit einer beispielartig eingetragenen Gruppe von Messpunkten P. Die Gruppe von auf der Ist-Oberfläche gelegenen Messpunkten erstreckt sich flächig über die Ist-Oberfläche. Dabei ist der Messpunkte-Erstreckungsabschnitt M ein Flächenabschnitt, der die Gruppe von Messpunkten umgrenzt. Insbesondere kann dabei - wie dargestellt - vorgesehen sein, dass die Umgrenzungslinie von außerhalb des Messpunkte-Erstreckungsabschnitts M gesehen konvex gekrümmt ist.

Das Verfahren verwendet in zumindest einer Iteration jeweils eine Anordnung von Bewertungs-Abschnitten. In der Figur 3 sind beispielartig zwei Bewertungs-Abschnitte A1, A2 eingetragen. Generell werden vorzugsweise in einer Iteration Bewertungs-Abschnitte vorgesehen, die nach Gestalt, Größe und Anzahl den Ist-Oberflächenabschnitt S1 abdecken. Davon unabhängig werden generell vorzugsweise in den Iterationen eine oder mehrere der folgenden Bestimmungsgrößen der Bewertungs-Abschnitte verändert:
(1) Abstand oder Überlappungsbetrag zwischen jeweils zwei benachbarten Bewertungs-Abschnitten,
(2) Gestalt der Bewertungs-Abschnitte,
(3) Größe der Bewertungs-Abschnitte, z.B. Länge und/oder Breite der jeweiligen Bewertungs-Abschnitte A1, A2.

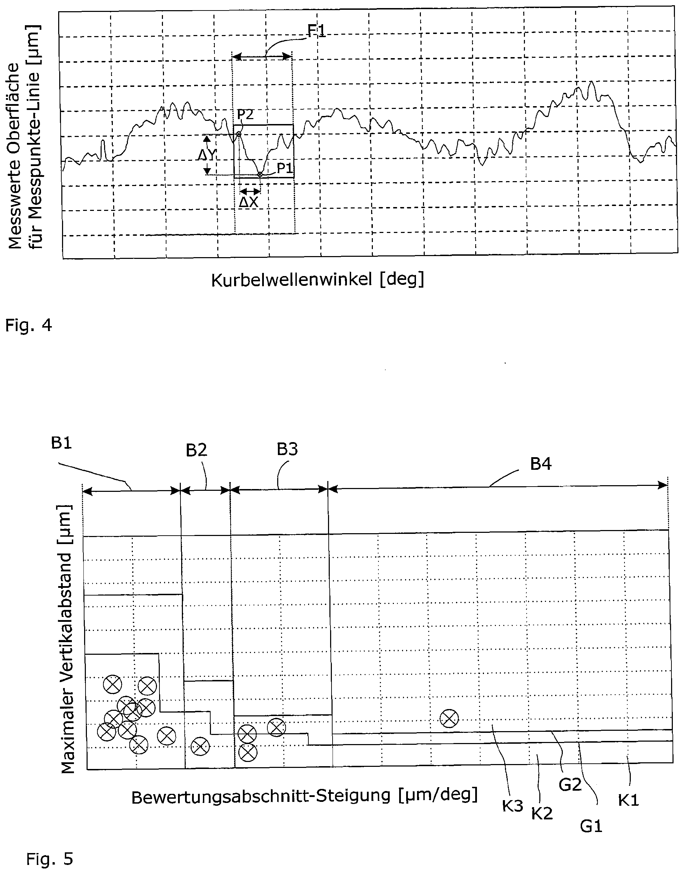

In der Figur 4 ist die Ermittlung einer Bewertungsabschnitt-Steigung beispielartig an Hand eines Bewertungs-Abschnitts F1 der Figur 2 mit dem maximalen Vertikalabstand ΔY, dem Abstand zwischen dem Bewertungsabschnitt-Tiefstpunkt P1 und dem Bewertungsabschnitt-Höchstpunkt P2 dargestellt. Der Abstand zwischen dem Bewertungsabschnitt-Tiefstpunkt P1 und dem Bewertungsabschnitt-Höchstpunkt P2 in der Projektion derselben auf einen Soll-Oberflächenabschnitt ist mit "ΔX" bezeichnet.

Im Schritt (b) kann für die Bewertungsabschnitt-Steigung alternativ auch die Steigung der Verbindungsgerade zwischen dem Bewertungsabschnitt-Tiefstpunkt und dem Bewertungsabschnitt-Höchstpunkt aufgrund des maximalen Vertikal-Abstands bezogen auf einen Horizontal-Abstand in Richtung der Mess-Spur ermittelt werden.

Ein Bewertungsabschnitt-Tiefstpunkt und ein Bewertungsabschnitt-Höchstpunkt sowie eine Bewertungsabschnitt-Steigung ist somit von den existierenden Messpunkten des jeweiligen Bewertungs-Abschnitts zu ermitteln, so dass für jeden Bewertungs-Abschnitt F1, F2, F3, F4 jeweils ein Wertepaare jeweils eines maximalen Vertikalabstands und einer Bewertungsabschnitt-Steigung ermittelt wird.

Bei dem in den Figuren 1 und 4 dargestellten Ausführungsbeispiel ist der Soll-Oberflächenabschnitt ein zylindrisch umlaufender Oberflächenabschnitt. Dabei erstreckt sich die Mess-Spur M1 über den Umfang des zylindrisch umlaufenden Oberflächenabschnitts.

Nach einer Ausführungsform des Verfahrens kann dabei vorgesehen sein, dass die Anordnung von Bewertungs-Abschnitten zumindest einer Iteration sich über eine Umfangslänge hinaus erstreckt und in dem jeweiligen Abschnitt eines Bewertungs-Abschnitts, der sich über eine Umfangslänge hinaus erstreckt, die Mess-Spur einer anschließenden weiteren Umfangslänge verwendet wird.

Auch kann vorgesehen sein, dass in einem Fall, in dem ein Bewertungsabschnitt-Tiefstpunkt und ein Bewertungsabschnitt-Höchstpunkt an Enden oder Randpunkten und insbesondere an entgegen gesetzt zueinander gelegenen Enden oder Randpunkten eines Bewertungs-Abschnitts liegen, der jeweilige Bewertungs-Abschnitt nicht für die Auswertung mit einem Grenz-Kriterium verwendet wird.

Nach dem erfindungsgemäßen Verfahren wobei in einem weiteren Verfahrensschritt die in der zumindest einen Iteration für die jeweiligen Bewertungs-Abschnitte derselben jeweils ermittelten Wertepaare jeweils eines maximalen Vertikalabstands und einer Bewertungsabschnitt-Steigung einem Grenz-Kriterium zugeordnet wird.

Diese Zuordnung kann nach einer in der Figur 5 gezeigten Ausführungsform dadurch realisiert sein, dass die Zuordnung der Wertepaare jeweils eines maximalen Vertikalabstands und einer Bewertungsabschnitt-Steigung einem Grenz-Kriterium grafisch durch Eintrag der Wertepaare in einem Wertefeld erfolgt, das durch eine Koordinatenachse U für Bewertungsabschnitt-Steigungen und eine Koordinatenachse V für maximale Vertikalabstände aufgespannt ist. Dabei ist das Grenz-Kriterium eine in dem Wertefeld verlaufende Grenzkurve G1, die das Wertefeld in eine Seite mit zulässigen und eine Seite mit nicht zulässigen Abweichungen von der Soll-Oberfläche teilt. In das Wertefeld kann auch eine zweite Grenzkurve G2 eingetragen sein, die zumindest abschnittsweise in einem Sicherheitsabstand zu der Grenzkurve G1 verläuft und die als weiteres oder zusätzliches Grenz-Kriterium verwendet werden kann. Bei der Definition von zwei Grenzkurven G1, G2 definieren diese einen unterhalb der ersten Grenzkurve G1 gelegenen ersten Grenzbereich K1, einen zwischen der ersten Grenzkurve G1 und der zweiten Grenzkurve G2 gelegenen zweiten Grenzbereich K2 und einen oberhalb der Grenzkurve G2 gelegenen dritten Grenzbereich K3 (Figur 3). Die Lage eines Messpunktes in einer der Grenzbereiche kann zur Ermittlung der von Gestaltabweichungen einer Ist-Oberfläche herangezogen werden.

Die in der Figur 5 gezeigte Auswertung mit Hilfe zumindest einer Grenzkurve kann auch analytisch, also z.B. durch einen Software-Algorithmus in einem Computerprogrammprodukt realisiert sein.

Die Auswertung der Zuordnung der in das Wertefeld eingetragenen Punkte zu der Grenzkurve G1 kann durch Eintragung von Bereichen B1, B2, B3, B4 entlang der Bewertungsabschnitt-Steigung erfolgen.

Alternativ oder zusätzlich dazu kann das Grenz-Kriterium ein Kriterium-Wert und insbesondere ein numerisches Kriterium insbesondere für den jeweils zulässigen maximalen Vertikalabstand sein, das abhängig von der Bewertungsabschnitt-Steigung sein kann.

## Patentansprüche

1. Verfahren zur Bewertung einer Gestaltabweichung eines Ist-Oberflächenabschnitts (S1) einer realen Ist-Oberfläche von einem Soll-Oberflächenabschnitt auf der Basis von gemessenen Vertikal-Informationen jeweils von Messpunkten (P) einer Gruppe von auf der Ist-Oberfläche gelegenen Messpunkten (P), wobei die Gruppe von Messpunkten (P) in einem deren Positionen definierenden Messpunkte-Erstreckungsabschnitt (M) des Ist-Oberflächenabschnitts (S1) gelegen sind, wobei das Verfahren zumindest eine Iteration jeweils mit einer Anordnung von Bewertungs-Abschnitten (F1, F2, F3, F4) verwendet, die in dem Ist-Oberflächenabschnitt (S1) zumindest abschnittsweise über den Messpunkte-Erstreckungsabschnitt (M) verteilt und versetzt zueinander gelegen sind, wobei eine Iteration jeweils die folgenden Schritte aufweist:
(a) für jeden Messpunkt (P) einer Anzahl von Messpunkten (P) jedes Bewertungs-Abschnitts (F1, F2, F3, F4) Ermittlung eines maximalen Vertikalabstands (ΔY), der sich als größter Abstand in einer vorgegebenen Vertikalrichtung zwischen jeweils zwei Messpunkten (P) ergibt, wobei die Vertikalrichtung quer zu dem Messpunkte-Erstreckungsabschnitt (M1) verläuft und der maximale Vertikalabstand (ΔY) jeweils zwischen einem Bewertungsabschnitt-Tiefstpunkt (P1) und einem Bewertungsabschnitt-Höchstpunkt (P2) auftritt,
(b) Ermittlung einer Bewertungsabschnitt-Steigung, die eine Verbindungsgerade zwischen dem Bewertungsabschnitt-Tiefstpunkt (P1) und dem Bewertungsabschnitt-Höchstpunkt (P2) aufgrund des maximalen Vertikal-Abstands (ΔY) bezogen auf einen Abstand zwischen dem Bewertungsabschnitt-Tiefstpunkt (P1) und dem Bewertungsabschnitt-Höchstpunkt (P2) in der Projektion derselben auf einen Soll-Oberflächenabschnitt hat, der ein ideales Modell des Ist-Oberflächenabschnitts (S1) darstellt,
wobei in einem weiteren Verfahrensschritt die in der zumindest einen Iteration für die jeweiligen Bewertungs-Abschnitte (F1, F2, F3, F4) derselben jeweils ermittelten Wertepaare jeweils eines maximalen Vertikalabstands (ΔY) und einer Bewertungsabschnitt-Steigung einem Grenz-Kriterium zugeordnet wird.

2. Verfahren nach dem Anspruch 1, wobei die Gruppe von auf der Ist-Oberfläche gelegenen Messpunkten (P) eine Reihe von Messpunkten (P) ist und wobei der Messpunkte-Erstreckungsabschnitt (M) eine Messpunkte-Linie (M1), auf der die Messpunkte (P) der Gruppe von Messpunkten (P) gelegen sind, ist.

3. Verfahren nach dem Anspruch 1 oder 2, wobei sich die Gruppe von auf der Ist-Oberfläche gelegenen Messpunkten (P) flächig über die Ist-Oberfläche erstreckt und wobei der Messpunkte-Erstreckungsabschnitt (M) ein Flächenabschnitt (M2) ist, der die Gruppe von Messpunkten (P) umgrenzt.

4. Verfahren nach einem der voranstehenden Ansprüche, wobei das Verfahren zumindest zwei Iterationen aufweist und die Anordnungen in unterschiedlichen Iterationen sich in zumindest einem der beiden folgenden Eigenschaften unterscheiden:
(i) die Größen der Bewertungs-Abschnitte (F1, F2, F3, F4) verschiedener Anordnungen von Bewertungs-Abschnitten (F1, F2, F3, F4) sind zumindest teilweise unterschiedlich,
(ii) die Positionen der Bewertungs-Abschnitte (F1, F2, F3, F4) verschiedener Anordnungen von Bewertungs-Abschnitten (F1, F2, F3, F4) auf dem Messpunkte-Erstreckungsabschnitt (M) sind zumindest teilweise unterschiedlich.

5. Verfahren nach einem der voranstehenden Ansprüche, wobei sich zumindest in zwei Iterationen die Bewertungs-Abschnitte (F1, F2, F3, F4) der jeweiligen Anordnungen von Bewertungs-Abschnitten (F1, F2, F3, F4) überlappen und sich die Anordnungen der Bewertungs-Abschnitte (F1, F2, F3, F4) durch ein unterschiedliches Maß der Überlappung der Bewertungs-Abschnitte (F1, F2, F3, F4) unterscheiden.

6. Verfahren nach einem der voranstehenden Ansprüche, wobei in zumindest einer Iteration die Anordnung der Bewertungs-Abschnitte (F1, F2, F3, F4) den Messpunkte-Erstreckungsabschnitt (M) vollständig abdeckt.

7. Verfahren nach einem der voranstehenden Ansprüche, wobei die Bewertungs-Abschnitte (F1, F2, F3, F4) einer Anordnung von Bewertungs-Abschnitten (F1, F2, F3, F4) einer jeweiligen Iteration dieselben Abschnittslängen (LF) haben.

8. Verfahren nach einem der voranstehenden Ansprüche, wobei die Bewertungs-Abschnitte (F1, F2, F3, F4) einer Anordnung von Bewertungs-Abschnitten (F1, F2, F3, F4) der verschiedenen Iterationen unterschiedliche Größen haben.

9. Verfahren nach einem der voranstehenden Ansprüche, wobei sich die sich zumindest teilweise über jeweils einen Messpunkte-Erstreckungsabschnitt (M) erstreckenden Bewertungs-Abschnitte (F1, F2, F3, F4) einer Anordnung von Bewertungs-Abschnitten (F1, F2, F3, F4) zumindest teilweise einander überlappen.

10. Verfahren nach einem der voranstehenden Ansprüche, wobei der Soll-Oberflächenabschnitt ein zylindrisch umlaufender Oberflächenabschnitt ist und sich der Messpunkte-Erstreckungsabschnitt (M) über den Umfang des zylindrisch umlaufenden Oberflächenabschnitts erstreckt.

11. Verfahren nach einem der voranstehenden Ansprüche,
wobei die Zuordnung der Wertepaare jeweils eines maximalen Vertikalabstands (ΔY) und einer Bewertungsabschnitt-Steigung einem Grenz-Kriterium grafisch durch Eintrag der Wertepaare in einem Wertefeld erfolgt, das durch eine Koordinatenachse für Bewertungsabschnitt-Steigungen und eine Koordinatenachse für maximale Vertikalabstände (ΔY) aufgespannt ist, und
wobei das Grenz-Kriterium eine in dem Wertefeld verlaufende Grenzkurve (G1, G2) ist, die das Wertefeld in eine Seite mit zulässigen und eine Seite mit nicht zulässigen Abweichungen von der Soll-Oberfläche teilt.

12. Verfahren nach einem der voranstehenden Ansprüche,
wobei das Grenz-Kriterium ein Kriterium-Wert und insbesondere ein numerisches Kriterium ist,
wobei für jeweils ein Wertepaar eines Bewertungs-Abschnitts (F1, F2, F3, F4) eine Wertepaar-Wertangabe und insbesondere ein numerischer Wert ermittelt wird,
wobei die Zuordnung von Grenz-Kriterium und Wertepaaren durch einen Vergleich des Kriterium-Werts mit der Wertepaar-Wertangabe realisiert ist.

13. Computerprogrammprodukt, das zur Durchführung des Verfahrens nach einem der voranstehenden Ansprüche ausgeführt ist.

14. Oberflächenbewertungs-System zur Bewertung einer Gestaltabweichung eines Ist-Oberflächenabschnitts (S1) einer realen Ist-Oberfläche von einem Soll-Oberflächenabschnitt, das Oberflächenbewertungs-System aufweisend ein Sensor-System zur Ermittlung von Vertikal-Informationen eines Ist-Oberflächenabschnitts (S1), eine Auswertungsvorrichtung mit einer Auswertungsfunktion, die eine Schnittstelle zu dem Sensor-System aufweist,
wobei die Auswertungsfunktion zumindest eine Iteration jeweils mit einer Anordnung von Bewertungs-Abschnitten (F1, F2, F3, F4) ausführt, die in dem Ist-Oberflächenabschnitt (S1) zumindest abschnittsweise über den Messpunkte-Erstreckungsabschnitt (M) verteilt und versetzt zueinander gelegen sind, wobei die Auswertungsfunktion eine Verarbeitungsfunktion aufweist, die folgende Schritte ausführt:
(a) für jeden Messpunkt (P) einer Anzahl von Messpunkten (P) jedes Bewertungs-Abschnitts (F1, F2, F3, F4) Ermittlung eines maximalen Vertikalabstands (ΔY), der sich als größter Abstand in einer vorgegebenen Vertikalrichtung zwischen jeweils zwei Messpunkten (P) ergibt, wobei die Vertikalrichtung quer zu dem Messpunkte-Erstreckungsabschnitt (M) verläuft und der maximale Vertikalabstand (ΔY) jeweils zwischen einem Bewertungsabschnitt-Tiefstpunkt (P1) und einem Bewertungsabschnitt-Höchstpunkt (P2) auftritt,
(b) Ermittlung einer Bewertungsabschnitt-Steigung, die eine Verbindungsgerade zwischen dem Bewertungsabschnitt-Tiefstpunkt (P1) und dem Bewertungsabschnitt-Höchstpunkt (P2) aufgrund des maximalen Vertikal-Abstands (ΔY) bezogen auf einen Abstand zwischen dem Bewertungsabschnitt-Tiefstpunkt (P1) und dem Bewertungsabschnitt-Höchstpunkt (P2) in der Projektion derselben auf einen Soll-Oberflächenabschnitt hat, der ein ideales Modell des Ist-Oberflächenabschnitts (S1) darstellt,
wobei in einem weiteren Verfahrensschritt die in der zumindest einen Iteration für die jeweiligen Bewertungs-Abschnitte (F1, F2, F3, F4) derselben jeweils ermittelten Wertepaare jeweils eines maximalen Vertikalabstands (ΔY) und einer Bewertungsabschnitt-Steigung einem Grenz-Kriterium zugeordnet wird.

15. Oberflächenbewertungs-System nach dem Anspruch 14, wobei die Verarbeitungsfunktion zur Ausführung des Verfahrens nach den Ansprüchen 2 bis 12 realisiert ist.

## Claims

1. A method for evaluating a deviation in shape of an actual surface portion (S1) of a real actual surface from a desired surface portion based on measured vertical information in each case of measurement points (P) of a group of measurement points (P) which are located on the actual surface, wherein the group of measurement points (P) are located in a measurement-point extent portion (M) of the actual surface portion (S1) which defines the positions thereof, wherein the method uses at least one iteration in each case with an arrangement of evaluation portions (F1, F2, F3, F4) which in the actual surface portion (S1) are located at least in portions distributed over the measurement-point extent portion (M) and offset relative to one another, wherein an iteration comprises in each case the following steps:
(a) for each measurement point (P) of a number of measurement points (P) of each evaluation portion (F1, F2, F3, F4), ascertaining a maximum vertical distance (ΔY) which is yielded as the greatest distance in a predetermined vertical direction between two measurement points (P) in each case, wherein the vertical direction runs transversely to the measurement-point extent portion (M1) and the maximum vertical distance (ΔY) in each case occurs between an evaluation portion trough (P1) and an evaluation portion peak (P2),
(b) ascertaining an evaluation portion gradient which has a straight connecting line between the evaluation portion trough (P1) and the evaluation portion peak (P2) on the basis of the maximum vertical distance (ΔY) relative to a distance between the evaluation portion trough (P1) and the evaluation portion peak (P2) in the projection thereof onto a desired surface portion which represents an ideal model of the actual surface portion (S1),
wherein in a further method step the value pairs of in each case a maximum vertical distance (ΔY) and an evaluation portion gradient which are ascertained in each case in the at least one iteration for the respective evaluation portions (F1, F2, F3, F4) thereof is associated with a limit criterion.

2. A method according to Claim 1, wherein the group of measurement points (P) which are located on the actual surface is a row of measurement points (P) and wherein the measurement-point extent portion (M) is a measurement-point line (M1) on which the measurement points (P) of the group of measurement points (P) are located.

3. A method according to Claim 1 or Claim 2, wherein the group of measurement points (P) which are located on the actual surface extends two-dimensionally over the actual surface, and wherein the measurement-point extent portion (M) is a surface portion (M2) which surrounds the group of measurement points (P).

4. A method according to one of the preceding claims, wherein the method comprises at least two iterations and the arrangements in different iterations differ in at least one of the following two properties:
(i) the sizes of the evaluation portions (F1, F2, F3, F4) of different arrangements of evaluation portions (F1, F2, F3, F4) are different at least in part,
(ii) the positions of the evaluation portions (F1, F2, F3, F4) of different arrangements of evaluation portions (F1, F2, F3, F4) on the measurement-point extent portion (M) are different at least in part.

5. A method according to one of the preceding claims, wherein at least in two iterations the evaluation portions (F1, F2, F3, F4) of the respective arrangements of evaluation portions (F1, F2, F3, F4) overlap and the arrangements of the evaluation portions (F1, F2, F3, F4) differ by a different amount of the overlap of the evaluation portions (F1, F2, F3, F4).

6. A method according to one of the preceding claims, wherein in at least one iteration the arrangement of the evaluation portions (F1, F2, F3, F4) completely covers the measurement-point extent portion (M).

7. A method according to one of the preceding claims, wherein the evaluation portions (F1, F2, F3, F4) of an arrangement of evaluation portions (F1, F2, F3, F4) of a respective iteration have the same portion lengths (LF).

8. A method according to one of the preceding claims, wherein the evaluation portions (F1, F2, F3, F4) of an arrangement of evaluation portions (F1, F2, F3, F4) of the different iterations are of different sizes.

9. A method according to one of the preceding claims, wherein the evaluation portions (F1, F2, F3, F4) of an arrangement of evaluation portions (F1, F2, F3, F4) which at least in part extend over in each case one measurement-point extent portion (M) overlap one another at least in part.

10. A method according to one of the preceding claims, wherein the desired surface portion is a cylindrically circumambient surface portion, and the measurement-point extent portion (M) extends over the periphery of the cylindrically circumambient surface portion.

11. A method according to one of the preceding claims,
wherein the association of the value pairs in each case of a maximum vertical distance (ΔY) and of an evaluation portion gradient with a limit criterion takes place graphically by entering the value pairs in a value field which is spanned by one coordinate axis for evaluation portion gradients and one coordinate axis for maximum vertical distances (ΔY), and
wherein the limit criterion is a limit curve (G1, G2) running in the value field which divides the value field into a side with permissible and a side with non-permissible deviations from the desired surface.

12. A method according to one of the preceding claims,
wherein the limit criterion is a criterion value, and especially a numerical criterion,
wherein a value-pair value indication and especially a numerical value is ascertained for in each case one value pair of an evaluation portion (F1, F2, F3, F4),
wherein the association of limit criterion and value pairs is realised by a comparison of the criterion value with the value-pair value indication.

13. A computer program product which is designed to carry out the method according to one of the preceding claims.

14. A surface evaluation system for evaluating a deviation in shape of an actual surface portion (S1) of a real actual surface from a desired surface portion, the surface evaluation system having a sensor system for ascertaining vertical information of an actual surface portion (S1), an evaluation device with an evaluation function, which has an interface with the sensor system,
wherein the evaluation function carries out at least one iteration in each case with an arrangement of evaluation portions (F1, F2, F3, F4) which in the actual surface portion (S1) are located at least in portions distributed over the measurement-point extent portion (M) and offset relative to one another, wherein the evaluation function has a processing function which carries out the following steps:
(a) for each measurement point (P) of a number of measurement points (P) of each evaluation portion (F1, F2, F3, F4), ascertaining a maximum vertical distance (ΔY) which is yielded as the greatest distance in a predetermined vertical direction between two measurement points (P) in each case, wherein the vertical direction runs transversely to the measurement-point extent portion (M) and the maximum vertical distance (ΔY) in each case occurs between an evaluation portion trough (P1) and an evaluation portion peak (P2),
(b) ascertaining an evaluation portion gradient which has a straight connecting line between the evaluation portion trough (P1) and the evaluation portion peak (P2) on the basis of the maximum vertical distance (ΔY) relative to a distance between the evaluation portion trough (P1) and the evaluation portion peak (P2) in the projection thereof onto a desired surface portion which represents an ideal model of the actual surface portion (S1),
wherein in a further method step the value pairs of in each case a maximum vertical distance (ΔY) and an evaluation portion gradient which are ascertained in each case in the at least one iteration for the respective evaluation portions (F1, F2, F3, F4) thereof is associated with a limit criterion.

15. A surface evaluation system according to Claim 14, wherein the processing function is realised to carry out the method according to Claims 2 to 12.

## Revendications

1. Procédé permettant d'évaluer un écart de configuration d'un segment de surface réel (S1) d'une surface réelle effective par rapport à un segment de surface de consigne sur le fondement d'informations verticales mesurées de points de mesure (P) respectifs d'un groupe de points de mesure (P) situés sur la surface réelle, les groupes de points de mesure (P) étant situés dans un segment d'extension (M) des points de mesure du segment de surface réel (S1) définissant leurs positions, le procédé utilisant respectivement au moins une itération avec un agencement de segments d'évaluation (F1, F2, F3, F4) qui sont situés dans le segment de surface réel (S1) en étant répartis au moins par segments sur le segment d'extension des points de mesure (M) et décalés les uns par rapport aux autres, chaque itération comprenant les étapes suivantes consistant à :
(a) pour chaque point de mesure (P) d'un ensemble de points de mesure (P) de chaque segment d'évaluation (F1, F2, F3, F4) déterminer la distance verticale maximum (ΔY) qui correspond à la plus grande distance dans une direction verticale prédéfinie entre deux points de mesure (P) respectifs, la direction verticale s'étendant transversalement au segment d'extension des points de mesure (M1) et la distance verticale maximum (ΔY) se présentant respectivement entre le point le plus bas (P1) du segment d'évaluation et le point le plus haut (P2) du segment d'évaluation,
(b) déterminer la pente du segment d'évaluation qu'à droite reliant le point le plus bas (P1) du segment d'évaluation et le point le plus haut (P2) du segment d'évaluation résultant de la distance verticale maximum (ΔY) par rapport à la distance entre le point le plus bas (P1) du segment d'évaluation et le point le plus haut (P2) du segment d'évaluation en projection sur un segment de surface de consigne qui correspond à un modèle idéal du segment de surface réel (S1),
dans une autre étape du procédé, la paire de valeurs respectivement déterminée lors de l'itération pour chaque segment d'évaluation (F1, F2, F3, F4) de la distance verticale (ΔY) maximum et de la pente du segment d'évaluation étant associée à un critère limite.

2. Procédé conforme à la revendication 1,
selon lequel le groupe de points de mesure (P) situé sur la surface est une rangée de points de mesure (P) et le segment d'extension (M) des points de mesure est une droite de points de mesure (M1) sur laquelle sont situés les points de mesure (P) du groupe de points de mesure (P).

3. Procédé conforme à la revendication 1 ou 2,
selon lequel le groupe de points de mesure (P) situé sur la surface réelle s'étend en nappe sur la surface réelle et le segment d'extension (M) des points de mesure est un segment de surface (M2) qui délimite le groupe de points de mesure (P).

4. Procédé conforme à l'une des revendications précédentes,
comprenant au moins deux itérations et les agencements dans les différentes itérations se distinguent par au moins l'une des deux propriétés suivantes :
(i) les dimensions des segments d'évaluation (F1, F2, F3, F4) de différents agencements de segments d'évaluation (F1, F2, F3, F4) sont au moins partiellement différentes,
(ii) les positions des segments d'évaluation (F1, F2, F3, F4) de différents agencements de segments d'évaluation (F1, F2, F3, F4) sur le segment d'extension des points de mesure (M) sont au moins partiellement différentes.

5. Procédé conforme à l'une des revendications précédentes,
selon lequel au moins dans deux itérations les segments d'évaluation (F1, F2, F3, F4) des agencements respectifs de segments d'évaluation (F1, F2, F3, F4) se chevauchent et les agencements de segments d'évaluation (F1, F2, F3, F4) se distinguent par une valeur différente du chevauchement des segments d'évaluation (F1, F2, F3, F4).

6. Procédé conforme à l'une des revendications précédentes,
selon lequel dans au moins une itération, l'agencement des segments d'évaluation (F1, F2, F3, F4) recouvre totalement le segment d'extension (M) des points de mesure.

7. Procédé conforme à l'une des revendications précédentes,
selon lequel les segments d'évaluation (F1, F2, F3, F4) de l'agencement des segments d'évaluation (F1, F2, F3, F4) de chaque itération ont la même longueur de segment (LF).

8. Procédé conforme à l'une des revendications précédentes,
selon lequel les segments d'évaluation (F1, F2, F3, F4) de l'agencement de segments d'évaluation (F1, F2, F3, F4) des différentes itérations ont des dimensions différentes.

9. Procédé conforme à l'une des revendications précédentes,
selon lequel les segments d'évaluation (F1, F2, F3, F4) d'un agencement de segments d'évaluation (F1, F2, F3, F4) s'étendant au moins partiellement sur un segment d'extension de points de mesure (M) respectifs se chevauchent au moins partiellement.

10. Procédé conforme à l'une des revendications précédentes,
selon lequel le segment de surface de consigne est un segment de surface en forme de cylindre et le segment d'extension (M) des points de mesure s'étend sur la périphérie du segment de surface cylindrique.

11. Procédé conforme à l'une des revendications précédentes,
selon lequel l'association des paires de valeurs constituées par la distance verticale maximum (ΔY) et la pente du segment d'évaluation à un critère limite est effectuée graphiquement par entrée des paires de valeurs dans un champ de valeurs qui est fixé par un axe de coordonnées pour les pentes des segments d'évaluation et un axe de coordonnées pour les distances verticales maximum (ΔY), et
le critère limite est une courbe limite (G1, G2) s'étendant dans le champ de valeurs qui subdivise ce champ de valeurs en un côté correspondant à des écarts admissibles avec la surface de consigne et un côté correspondant à des écarts non admissibles avec la surface de consigne.

12. Procédé conforme à l'une des revendications précédentes,
selon lequel le critère limite est une valeur de critère et en particulier un critère numérique,
pour chaque paire de valeurs d'un segment d'évaluation (F1, F2, F3, F4), une indication de valeur de la paire de valeurs et en particulier une valeur numérique est déterminée, et
l'association d'un critère limite et de paires de valeurs est effectuée par une comparaison de la valeur du critère avec l'indication de la valeur de la paire de valeurs.

13. Produit-programme d'ordinateur qui est réalisé pour permettre la mise en œuvre du procédé conforme à l'une des revendications précédentes.

14. Système d'évaluation de surfaces pour permettre d'évaluer un écart de configuration d'un segment de surface réel (S1) d'une surface réelle effective par rapport à un segment de surface de consigne, ce système d'évaluation de surface comprenant un système de capteur permettant de déterminer des informations verticales d'un segment de surface réel (S1), et un dispositif d'évaluation ayant une fonction d'évaluation qui comporte une interface avec le système de capteur,
la fonction d'évacuation effectuant respectivement au moins une itération avec un agencement de segments d'évaluation (F1, F2, F3, F4) qui sont situés dans le segment de surface réel (S1) en étant répartis au moins par segments sur le segment d'extension des points de mesure (M) et décalés les uns par rapport aux autres, la fonction d'évaluation comportant une fonction de traitement qui exécute les étapes suivantes consistant à :
(a) pour chaque point de mesure (P) d'un ensemble de points de mesure (P) de chaque segment d'évaluation (F1, F2, F3, F4) déterminer une distance verticale maximum (ΔY) qui correspond à la plus grande distance dans une direction verticale prédéfinie entre deux points de mesure (P) respectifs, la direction verticale s'étendant transversalement au segment d'extension des points de mesure (M) et la distance verticale maximum (ΔY) se présentant respectivement entre le point le plus bas (P1) du segment d'évaluation et le point le plus haut (P2) du segment d'évaluation,
(b) déterminer la pente du segment d'évaluation qu'a la droite reliant le point le plus bas (P1) du segment d'évaluation et le point le plus haut (P2) du segment d'évaluation résultant de la distance verticale maximum (ΔY) par rapport à la distance entre le point le plus bas (P1) du segment d'évaluation et le point le plus haut (P2) du segment d'évaluation en projection sur un segment de surface qui correspond à un modèle idéal du segment de surface réel (S1), dans une autre étape de procédé la paire de valeurs respectivement déterminée lors de l'itération pour chaque segment d'évaluation (F1, F2, F3, F4) de la distance verticale maximum (ΔY) et de la pente du segment d'évaluation étant respectivement associée à un critère limite.

15. Système d'évaluation de surface conforme à la revendication 14, dans lequel la fonction de traitement est réalisée pour permettre la mise en œuvre du procédé conforme aux revendications 2 à 12.
